# EUROPEAN PATENT SPECIFICATION

(11) **EP 2 862 735 B1**
(45) Date of publication and mention of the grant of the patent: **05.04.2017**
(21) Application number: 14197872.6
(22) Date of filing: 13.02.2001
(51) Int. Cl.: B60G 17/015, G01C 21/00, G01C 21/30, G01C 5/00

(54) **Method for improving accuracy of vehicle position determination**
Verfahren zur Verbesserung der Genauigkeit von Fahrzeugpositionsbestimmung
Procédé permettant d'améliorer la précision de détermination de position de véhicule

(30) Priority: 27.03.2000 US 535849
(43) Date of publication of application: 22.04.2015
(62) Divisional of application: 10178610.1
(73) Proprietor: Bose Corporation, Framingham, MA 01701-9168 (US)
(72) Inventor: Knox, Lawrence D., Framingham, MA Massachusetts 01701-9168 (US); Lackritz, Neal M., Framingham, MA Massachusetts 01701-9168 (US); Parison, James A., Framingham, MA Massachusetts 01701-9168 (US); Short, William R., Framingham, MA Massachusetts 01701-9168 (US)
(74) Representative: Attali, Pascal

(56) References cited:
- EP-A- 0 534 892
- EP-A1- 0 302 736
- EP-A2- 0 359 287
- EP-A2- 0 393 935
- EP-A2- 0 747 668
- WO-A1-95/04325
- JP-A- H0 326 913
- JP-A- H0 413 920
- JP-A- H06 300 578
- US-A- 5 394 333
- US-A- 5 748 476

## Description

### BACKGROUND

The invention relates to vehicle position determination.

EP0 534 892 A1 discloses a method for vehicle position determination. The method comprises determining an initial vehicle position estimate based on GPS data, recording a sequence of sensor data from an elevation sensor, such as a barometer, located within the vehicle, and refining said initial vehicle position estimate by performing patent matching. The sensor determines the peaks and valleys of the elevation slopes and matches them with the known locations of such peaks and valleys on a pre-stored 3-D map which has a low number of reference points. A complete elevation profile can be calculated by interpolation, since the elevation sensor data obtained from a barometer does not provide sufficient accuracy for obtaining a Z-axis deflection data of a road profile,

The present invention aims at improving the accuracy of locating the position of the vehicle.

### SUMMARY

The present invention is defined in the appended set of claims.

In particular, the invention proposes a method for improving accuracy of vehicle position determination, comprising:
determining an initial vehicle position estimate based on GPS data,
recording a sequence of sensor data from a sensor located with the vehicle, and
refining the initial vehicle position estimate by performing pattern matching with a pattern matching system that looks for the presence of a known sequence of data in the recorded sequence of sensor data.

According to advantageous aspects that may be combined with each other:
- the sensor data is Z axis deflection data;
- the method further comprises using a dead reckoning system to provide additional information on vehicle speed and direction when GPS data is difficult to obtain;
- the dead reckoning system counts wheel rotations of the vehicle;
- the dead reckoning system tracks steering angle changes of the vehicle;
- the pattern matching system multiplies a sequence consisting of n numbers obtained from the known sequence of data by a corresponding sequence of n numbers obtained from the recorded sequence of sensor data, sums the results of the n multiplications, and determines when the sequences match by identifying when the sum of the n multiplications has a peak;
- the pattern matching system performs continuous pattern matching;
- the pattern matching system matches consecutive groups of n multiplications;
- the known sequence of data and the recorded sequence of data are transformed into the spatial domain prior to performing the pattern matching by the pattern matching system.

According to another aspect, there is provided an active suspension, for a surface vehicle for operating along a path and including a payload and payload compartment, said active suspension comprising:
a controllable suspension element for modifying the displacement between said payload and said path responsive to vertical disturbances in said path; and
a subsystem for issuing commands to said controllable suspension element to cause said controllable suspension element to exert a force responsive to a vertical disturbance in said path, to cause the displacement between said payload compartment and said path to change prior to said surface engaging device encountering said vertical disturbance.

The controllable suspension element may be a force applying element for coupling said payload compartment to a surface engaging device of said vehicle and for applying a force between said payload compartment and said surface engaging device.

The subsystem may be a trajectory developing subsystem that issues commands to cause said controllable suspension element to urge a point on said payload to follow a trajectory plan, the trajectory plan comprising a pre determined path in space.

The path may a profile described by profile data, and the trajectory developing system may further comprise a trajectory plan developing microprocessor for developing a trajectory plan based on the profile data.

The trajectory developing system preferably includes a smoothing device to smooth said profile data to develop said trajectory plan. The smoothing device may be a low pass filter and bi-directional.

The trajectory developing subsystem may further comprise a locator system for determining the location of said surface vehicle; a trajectory plan storage device, for storing a database of trajectory plans corresponding to locations; and a trajectory plan microprocessor for determining if said database contains a trajectory plan corresponding to said determined location, for retrieving said corresponding trajectory plan, and for transmitting to said active suspension instruction signals based on said corresponding trajectory plan.

The locator system may be a global positioning system device.

The locator system may also have a profile sensor for sensing a profile of said path; a road profile storage device for storing a database of path profiles; and a path profile microprocessor coupled to said storage device and to said profile sensor for comparing said sensed profile with said database of path profiles.

The path profile microprocessor, based on the comparison, retrieves a profile corresponding to the path the vehicle is currently travelling on, and the profile sensor acquires vertical deflection data associated with the path. The path profile microprocessor is adapted to compare said acquired vertical deflection data with said stored profiles.

The path profile microprocessor may be adapted to modify said retrieved profile and to store said modified profile in said profile storage device.

The profiles may include vertical deflection data. The system further includes a profile retrieving microprocessor, coupled to the controllable suspension element and to the profile storage device, for retrieving from the profile storage device one of the profiles, the one profile corresponding to the path on which the vehicle is travelling.

Another aspect includes a method for operating a surface vehicle along a path having disturbances, the surface vehicle having an active suspension for suspending a payload, the method comprising:
issuing commands to a controllable suspension element responsive to a vertical disturbance in said path, the controllable suspension element being capable of outputting a force to modify the displacement between the payload and the path, and;
exerting a force by means of the controllable suspension element, in response to the issued commands, to modify the displacement between the payload and the path prior to the surface vehicle encountering said vertical disturbance in the path.

### BRIEF DESCRIPTION OF THE DRAWINGS

Other features, objects, and advantages will become apparent from the following detailed description, which refers to the following drawings in which:
FIG. 1 is a diagrammatic view of a vehicle having a controllable suspension;
FIG. 2a is a partially block diagram, partially diagrammatic representation of a controllable suspension according to the invention;
FIG. 2b is a partially block diagram, partially diagrammatic representation of a controllable suspension according to the invention;
FIG. 3 is a diagrammatic view of the operation of a prior art active suspension;
FIGS. 4a - 4c are diagrammatic views of the operation of an active suspension according to the invention;
FIG. 5 is a diagrammatic view of the operation of the operation of an active suspension according to the invention;
FIGS. 6a, 6b, and 6c are flow diagrams illustrating the operation of a suspension system according to the invention; and
FIG.7 is a diagrammatic view illustrating a method of trajectory development.

### DETAILED DESCRIPTION

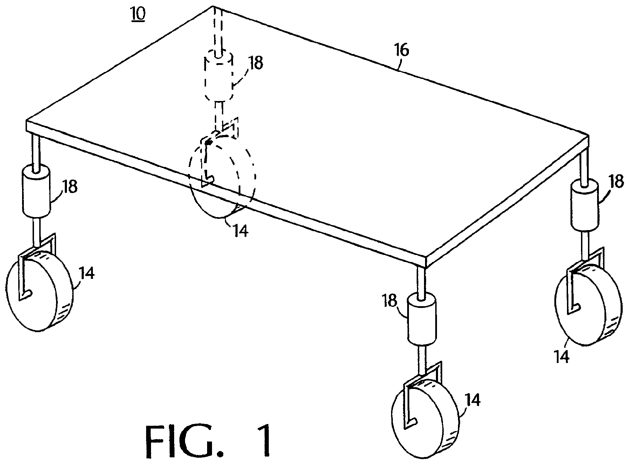

With reference now to the drawings and more particularly to FIG. 1, there is shown a diagrammatic view of a vehicle 10 according to the invention. A suspension system includes surface engaging devices, such as wheels 14 connected to payload compartment 16 (represented diagrammatically as a plane) of the vehicle by a controllable suspension element 18. In addition, the suspension system may include conventional suspension elements (not shown), such as a coil or leaf spring arrangement or damper. While one embodiment of the invention is an automobile, so that the surface engaging devices are wheels and the payload includes passengers, the invention may also be practiced in other types of vehicles, such as cargo carrying vehicles. Payload compartment 16 may be a planar structure or may be enclosed on some or all sides. The surface engaging devices may include tracks or runners. The invention may also be practiced in vehicles that engage the surface through some form of levitation, such as magnetic or pneumatic levitation, so that the surface engaging devices include devices that do not require physical contact with the surface, and so that the surface may include tracks or open terrain. For simplicity of explanation, the invention will be described as embodied in an automobile.

Controllable suspension elements 18 may be one of a variety of suspension elements that receive, or are capable of being adapted to receive, control signals from a microprocessor and to respond to the signals.

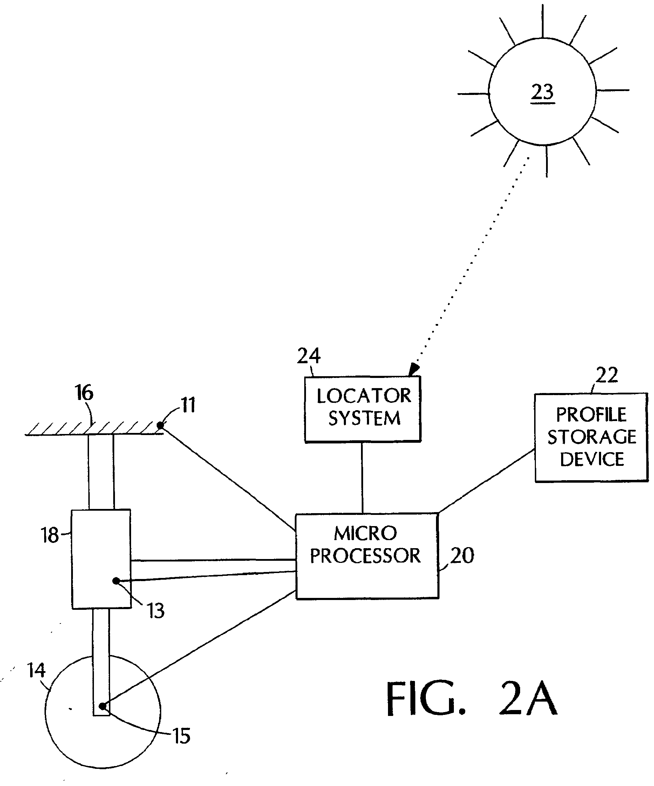

Controllable suspension elements 18 may be components or an active suspension system, in which the controllable suspension elements can respond to the control signals by varying the vertical displacement between the passenger compartment 16 and wheel 14 by applying a force. Suitable active suspension systems are described in U.S. Pat. Nos. 4,960,290 and 4,981,309 incorporated by reference herein. The force may be transmitted through some element such as a linear or rotary actuator, ball screw, pneumatic system, or hydraulic system, and may include intervening elements between the wheel and the force producing element. The controllable active suspension may also comprise an adaptive active vehicle suspension such as described in U.S. Pat. No. 5,432,700, in which signals may be used to modify adaptive parameters and gains. Controllable suspension elements 18 may also be components of a semi-active suspension system, which apply forces between passenger compartment 16 and wheel 14 reactively, in response to vertical forces resulting from wheel 14 passing over uneven surfaces. In semi-active suspension systems, the controllable suspension elements may respond to the control signals by extending or compressing a spring, by changing a damping rate, or in other ways. By way of example, the invention will be described in an embodiment in which the controllable suspension element is an active suspension element. Referring now to FIG. 2a, there is shown a block diagram of a suspension according to the invention. Controllable suspension element 18 is coupled to a microprocessor 20 which is in turn coupled to profile storage device 22 and optional locator system 24. The suspension system further includes sensors 11, 13, and 15 associated with payload compartment 16, controllable suspension elements 18, and wheels 14, respectively. Sensors, 11, 13, and 15 are coupled to microprocessor 20. Locator system 24 may receive signals from an external source, such as a positioning satellite 23. For convenience, only one of the controllable suspension elements 18 is shown. The remaining wheels 14, controllable suspension elements 18, and the respective sensors 11, 13, and 15 are coupled to microprocessor 20 substantially as shown in FIG. 2a.

Microprocessor 20 may be a single microprocessor as shown. Alternatively, the functions performed by microprocessor 20 may be performed by a number of microprocessors or equivalent devices, some of which can be located remotely from vehicle 10, and may wirelessly communicate with components of the suspension system, which are located on vehicle 10.

Profile storage device 22 may be any one of a number of types of writable memory storage, such as RAM, or mass storage devices such as a magnetic or writable optical disk. Profile storage device 22 may be included in the vehicle as shown, or may be at some remote location, with a broadcasting system for wirelessly communicating path profile data to the vehicle. Locator system 24 may be one of a number of systems for providing longitudinal and latitudinal position, such as the Global Positioning System (GPS) or an inertial navigation system (INS). Locator system 24 may include systems, which provide for user input to indicate location and may also include profile matching systems that compare the profile of the path being driven by the vehicle with the profiles stored in memory storage.

In one embodiment, the path being driven on is a roadway. However, the invention may be used in other types of vehicles that do not operate on roadways, such as open terrain vehicles and vehicles that operate on rails. The path can be typically defined by a location and a direction. By way of example, the invention will be described as embodied in an automobile for operating on a roadway.

A suspension system incorporating the invention may also include a trajectory planning subsystem, which includes (referring to FIG. 2a) microprocessor 20, profile storage device 22, and locator system 24.

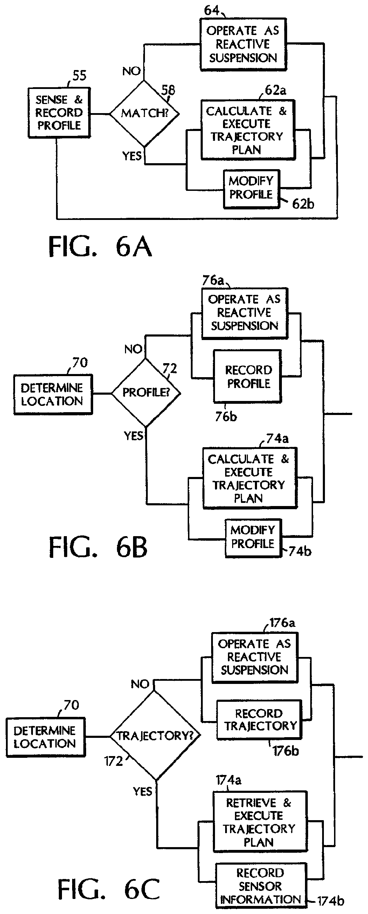

Locator system 24 detects the location of the vehicle, and microprocessor 20 retrieves a copy of the profile of the road, if available, from a plurality of profiles stored in profile storage device 22. Microprocessor 20 calculates or retrieves a trajectory plan responsive to the road profile, and issues control signals to controllable suspension element 18 to execute the trajectory plan. The profile retrieval, trajectory calculation, and suspension control may be performed by a single microprocessor as shown, or may be done by separate microprocessors if desired. The trajectory development process is described more filly in connection with FIGS. 6a and 6b. If controllable suspension element 18 is a semiactive suspension or an active suspension acting reactively to road forces, microprocessor 20 may issue an adjusted control signal to controllable suspension 16 based in part on the road profile.

In a typical form, a road profile includes a series of vertical (z-axis) displacements from a reference point. The z-axis displacement measurements are typically taken at uniform distances from the location taken in the direction of travel. A road profile can also contain additional data such as x-axis and y-axis displacement; compass heading; steering angle; or other information such as may be included in navigation systems, such as commercially available vehicle navigation products. The additional data may involve greater processing capability of microprocessor 20 and profile storage device 22, but may be advantageous in using "dead reckoning" or pattern matching techniques described below to more precisely locate the vehicle or in uniquely associating a road profile with a location. Additionally, the additional data may be advantageous in determining, for example, the degree to which traction should be considered in developing the trajectory.

A trajectory plan is a path in space of a point or set of points on the payload compartment. To control the pitch of the vehicle, the trajectory may represent at least two points, respectively forward and rearward in the payload compartment. To control the roll of the vehicle, the trajectory may represent at least two points, one on each side of the vehicle. In a four wheeled vehicle, it may be convenient to use for trajectory development four points in the payload compartment, one near each wheel. Pairs of the points could be averaged (such as averaging the two points on each side of the vehicle to consider roll in the development of the trajectory plan, or averaging the two points in the front and the rear, respectively, to consider pitch in the development of the trajectory plan). For simplicity of explanation, the invention will be described in terms of a single point. The microprocessor issues control signals to controllable suspension element 18 to cause the vehicle to follow the trajectory plan. More detail on trajectory plans and the execution of trajectory plans are set forth in the examples that follow.

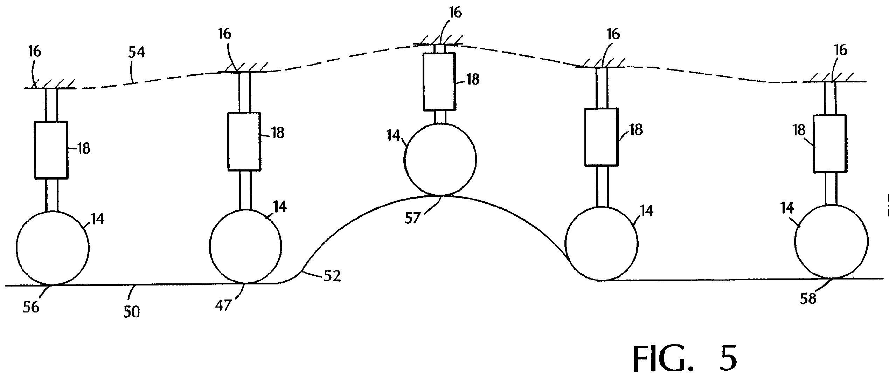

The trajectory plan may take a number of factors into account, for example matching the pitch or roll of the vehicle to the pitch or roll expected by the passengers; minimizing the vertical acceleration of the payload compartment; maximizing the stroke of the suspension available to absorb undulations in the road; minimizing the amplitude or occurrence of accelerations of an undesirable frequency, such as frequencies around 0.1 Hz, which tends to induce nausea; maximizing tire traction; or others. The trajectory plan may also include "anticipating" an undulation in the road and reacting to it before it is encountered, as will be described below in the discussion of FIG. 5. Further, particularly if the suspension system includes a conventional spring to support the weight of the car and the operation of the active suspension element extends or compresses the conventional spring, the trajectory plan may take power consumption into account.

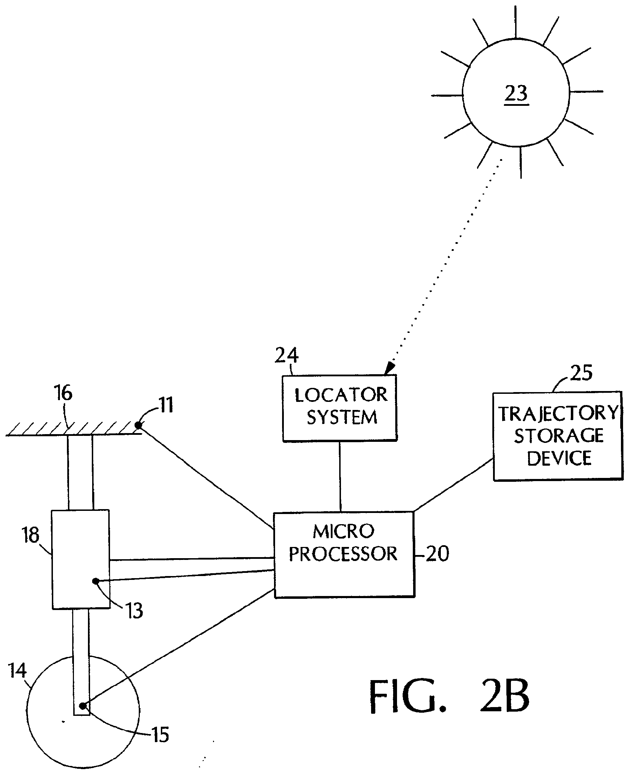

Referring now to FIG. 2b, there is shown another embodiment of the invention incorporating a trajectory storage device 25. Elements of FIG. 2b are similar to elements of FIG. 2a, except profile device 22 of FIG. 2a is replaced by a trajectory storage device 25. Trajectory storage device 25 may be any one of a number of types of writable memory storage, such as RAM, or mass storage devices such as a magnetic or writable optical disk. Profile storage device 22 may be included in the vehicle as shown, or may be at some remote location, with a broadcasting system for wirelessly communicating path profile data to the vehicle.

Operation of the embodiment of FIG. 2b is similar to the operation of the embodiment of FIG. 2a, except that microprocessor 20 retrieves and calculates trajectory plans that are associated with locations rather than being associated with profiles.

Another embodiment of the invention includes both the profile storage device of FIG. 2a and the trajectory storage device of FIG. 2b. In an embodiment including both profile storage device 22 and trajectory storage device 25, the storage devices may be separate devices or may be different portions of a single memory device. Operation of embodiments including trajectory storage device 25 are described further in the discussion of FIG. 6c.

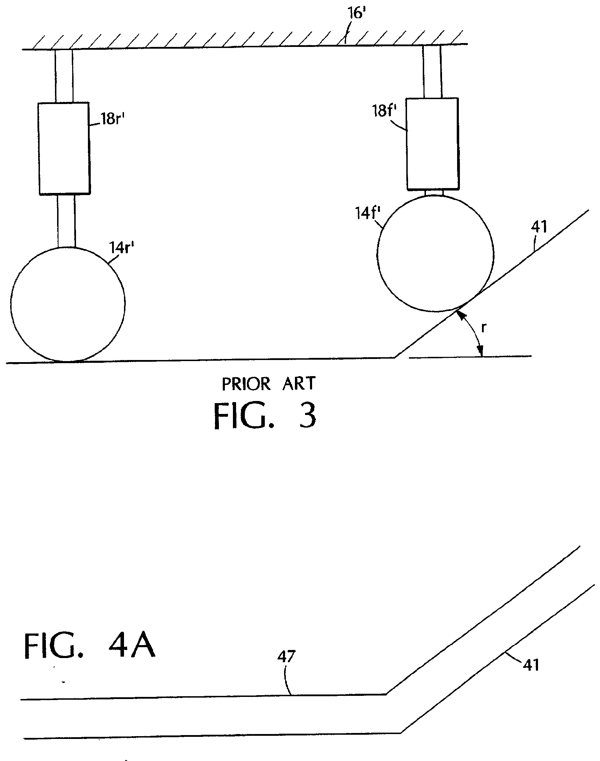

FIG. 3 shows an example of the operation of a conventional active suspension without a trajectory planning subsystem. In FIG. 3, when front wheel 14f encounters sloped section 41, active suspension element 18f exerts a force to shorten the distance between payload compartment 16' and front wheel 14f. When the rise r due to the slope approaches the maximum lower displacement of the suspension element, suspension element 14f is "nosed in" to slope 41, and in extreme cases may reach or approach a "bottomed out" condition, such that there is little or no suspension travel left to accommodate bumps in the rising surface.

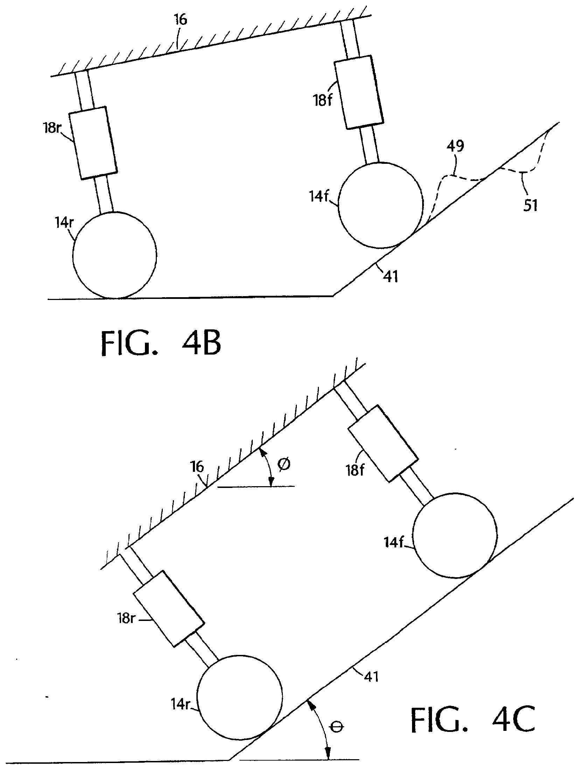

Referring now to FIGS. 4a - 4c, there is shown an example of the operation of an active suspension according to the invention. Microprocessor 20 of FIG. 2a furnishes a computed trajectory 47, which closely matches the road surface, including sloped section 41, and issues appropriate control signals to active suspension elements 18f and 18r to follow the trajectory. In this example, the trajectory can be followed by exerting no force to shorten or lengthen the distance between wheels 14f and 14r and payload compartment 16, or if the suspension system includes a conventional spring, the trajectory can be followed by exerting only enough force to counteract acceleration resulting from force exerted by the spring. In FIG. 4b, when the vehicle has reached the same position in the road as in FIG. 3, payload compartment 16 is tilted slightly. In FIG. 4c, the payload compartment is tilted at an angle which matches the tilt of the road. The gradual tilt of the payload compartment to match the tilt of the road matches rider expectations. An additional advantage is that if there is a bump 49 or depression 51 in the road, the full stroke of the suspension is available to absorb the bump or depression.

The example of FIGS. 4a - 4c illustrates the principle that following the trajectory may occur with little or no force being applied by the controllable suspension element 18 and that execution of the trajectory planning subsystem may override the normal operation of an active suspension. In FIGS. 4b and 4c, the vehicle is experiencing upward acceleration, and the normal operation of the active suspension would shorten the distance between wheel 14f and the payload compartment 16. However, since the payload compartment 16 is following the trajectory plan, microprocessor 20 issues a control signal that overrides the normal operation of the active suspension, thereby allowing the vehicle to follow the trajectory plan.

FIG. 5 shows another example of the operation of an active suspension with a trajectory planning subsystem. Road profile 50 includes a large bump 52. Microprocessor 20 (of FIG. 2a or 2b) furnishes a computed trajectory 54 appropriate for road profile 50 and issues corresponding control signals to controllable suspension element 18. In response to the control signals, at point 56, before wheel 14 has encountered bump 52, controllable suspension element 18 exerts a force to gradually lengthen the distance between wheel 14 and payload compartment 16. As wheel 14 travels over bump 52, the normal operation of the controllable suspension element 18 causes controllable suspension element 18 to exert a force, which shortens the distance between payload compartment 16 and wheel 14. When wheel 14 reaches the crown 57 of bump 52, controllable suspension element 18 begins to exerts a force, which lengthens the distance between payload compartment 16 and wheel 14. After wheel 14 has passed the end of bump 52, controllable suspension element 18 exerts a force shortening the distance between payload compartment 16 and wheel 14. The example of FIG. 5 illustrates the principle that the trajectory planning subsystem may cause the controllable suspension element 18 to exert a force to lengthen or shorten the distance between wheel 14 and payload compartment 16 even on a level road and further illustrates the principle that the trajectory plan may cause the controllable suspension element to react to a bump or depression in the road before the bump or depression is encountered.

The example of FIG. 5 illustrates several advantages of a suspension system according to the invention. By beginning to react to bump 52 before bump 52 is encountered and by continuing to react to the bump after the bump has been passed, the vertical displacement of the payload compartment is spread over a larger distance and over a longer period of time than if the suspension system reacted to bump 52 when the tire encountered bump 52. Thus, the vertical displacement, vertical velocity and vertical acceleration of payload compartment 16 are low, so passengers encounter less discomfort than with a suspension system without trajectory planning. The trajectory planning subsystem effectively provides for large bump 52, and the normal operation of the controllable suspension element is still available to handle perturbations that are not indicated in the road profile. If the road profile has sufficient resolution to only identify large perturbations such as large bump 52, or long or substantial slopes, or if the road profile is somewhat inaccurate, the active suspension element in normal operating mode need only react to the *difference* between the profile and the actual road surface. For example, if the actual profile of large bump 52 is slightly different horn the stored profile on which the trajectory plan is based, the active suspension, system need only provide for the difference between the actual and the stored profile of bump 52. Thus, even if the profile is imperfect, the ride experienced by the passengers in the vehicle is typically better than if the suspension lacks the trajectory planning feature.

The trajectory plan may take perceptual thresholds of vehicle occupants into account. For example, in FIG. 5, even less vertical acceleration would be encountered by the occupants of the vehicle if the trajectory plan began rising before point 56 and returned the vehicle to the equilibrium position after point 58. However, the difference in vertical acceleration may not be enough to be perceived by the vehicle occupants, so the active suspension need not react before point 56 or continue to react past point 58. Additionally, if the vehicle includes a conventional suspension spring, the force applied by the active suspension between points 56 and 47 may need to exert a force to extend the spring in addition to a force to lift the vehicle, so not beginning the rise of the trajectory plan until point 56 may consume less power than beginning the rise earlier.

Referring now to FIG. 6a, there is shown a method for developing, executing, and modifying a trajectory plan by a system without optional locator system 24. At step 55, sensors 11, 13, 15 collect road profile information and transmit the information to microprocessor 20 which records the road profile in profile storage device 22. At step 58, the profile microprocessor compares the road profile information with road profiles that have been previously stored in profile storage device 22. The comparison may be accomplished using a pattern matching system as described below. If the road profile information matches a road profile that has previously been stored, at step 62a, the profile is retrieved, and microprocessor 20 furnishes a computed trajectory plan appropriate for that profile. Concurrently, at step 62b, sensors 11, 13, 15 furnish signal representations of the road profile that may be used to modify, if necessary, the profile stored in profile storage device 22.

If it is determined at step 58 that there is no previously stored road profile that matches the road profile information collected in step 56, at step 64 controllable suspension element 18 acts as a reactionary active suspension.

Referring now to FIG. 6b, there is shown a method for developing, modifying, and executing a trajectory plan by a system that includes optional locator system 24. At step 70, locator system 24 determines the location and direction of the vehicle. At step 72 trajectory microprocessor 20 examines stored profiles in profile storage device 22 to see if there is a profile associated with that location. If there is a profile associated with that location, at step 74a microprocessor 20 retrieves the profile and transmits the retrieved profile information to controllable suspension element 18, which executes the trajectory plan. Depending on how the data is stored and processed, step 72 may also consider direction of travel in addition to location in determining whether there is an associated profile. Concurrently, at step 74b, sensors 11, 13, 15 provide signals representative of the road profile that may be used to modify, if necessary, the profile stored in profile storage device 22.

If it is determined at step 72 that there is no previously stored road profile associated with that location and direction, at step 76a controllable suspension 18 acts as a reactionary active suspension. Concurrently, at step 76b, sensors 11, 13, 15 furnish signals representative of the road profile, which is stored in profile storage device 22.

Referring now to FIG. 6c, there is shown a method for developing, modifying, and executing a trajectory plan in an embodiment of the invention as shown in FIG. 2b and having some device to locate the vehicle, such as the locator system 24, or the profile storage device 22 of FIG. 2a. At step 70, locator system 24 determines the location and direction of the vehicle. At step 172 trajectory microprocessor 20 examines trajectory plans in trajectory plan storage device 25 to see if there is a trajectory plan associated with that location. If there is a profile associated with that location, at step 174a microprocessor 20 retrieves the profile and transmits the information to controllable suspension element 18, which executes the trajectory plan. Depending on how the data is stored and processed, step 172 may also consider direction of travel in addition to location in determining whether there is an associated profile. Concurrently, at step 174b, signals from sensors 11, 13, 15 representative of the actual profile may be recorded so that the trajectory plan associated with the location can later be modified to provide a smoother or more comfortable ride.

If it is determined at step 172 that there is no previously stored road profile associated with that location and direction, at step 176a controllable suspension 18 acts as a reactionary active suspension. Concurrently, at step 176b, signals representative of the trajectory resulting from the reactionary operation of the controllable suspension 18 are recorded so that the stored trajectory can be modified to provide a smoother or more comfortable ride.

The methods of FIG. 6a, 6b, and 6c illustrate one of the learning features of the invention. Each time the vehicle is driven over a portion of road, the profile or trajectory, or both, may be modified, so that the trajectory furnished by microprocessor 20 may be used to provide for a smoother ride for the occupants of the vehicle during subsequent rides over the same portion of road.

It is desirable to determine the location of the vehicle accurately, ideally within one meter, though an active suspension with a locator system having a lesser degree of precision performs better than conventional active suspensions. One method of attaining a high degree of precision is to include in locator system 24 of FIG. 2a incorporating a high precision GPS system, such as a differential system accurate to within centimeters. Another method is to include in locator system 24 of FIG. 2a a GPS system having a lower degree of precision (such as a non-differential system accurate to within about 50 meters or some other locator system not incorporating GPS) and a supplementary pattern matching system.

In one pattern matching system, search for a known sequence of data in a target string of data. One method of pattern matching particularly useful for data that increases and decreases from a base point includes multiplying a known sequence of n numbers by strings of corresponding length in the target string. The n products are then summed, and when the strings match, the sum peaks. Supplementary or additional pattern matching techniques, such as continuous pattern matching or matching consecutive groups of *n* products can be used to minimize the occurrence of false matches.

This form of pattern matching can be usefully applied to a trajectory planning active suspension by recording a pattern of z-axis deflections from a base point and using the pattern of z-axis deflections as the search string. Pattern matching can then be used in at least two ways. In one application, the GPS system is used to get an approximate (within 30 meters) location of the vehicle, and pattern matching is then used to locate the vehicle more precisely, by using for the target string, the previously recorded pattern of z-axis deflections stored in profile storage device 22 of FIG. 2a. In a second application, pattern matching is used to compare the pattern of z-axis deflections as measured by sensor 15 of FIG. 2a with patterns of z-axis deflections stored in profile storage device 22 to determine if there is a profile stored in memory.

To supplement the GPS and pattern matching system, a "dead reckoning" system may also be used. In a dead reckoning system, a vehicle change in location is estimated by keeping track of the distance the vehicle travels and the direction the vehicle travels.

When the vehicle has been located precisely, the distance the vehicle travels may be tracked by counting wheel rotations, and the direction of travel may be tracked by recording the wheel angle or steering angle. A dead reckoning system is very useful if GPS readings are difficult (such as if there are nearby tall buildings) and also reduces the frequency at which GPS readings need be taken.

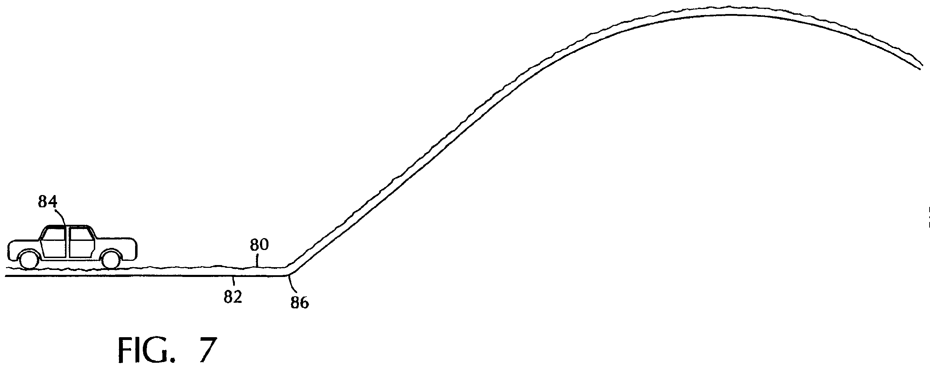

Referring now to FIG. 7, there is shown a diagrammatic view of an automobile and a road surface, illustrating the development of a trajectory. Line 80 represents the road profile as stored by profile device 22 of FIG. 2a. Line 82 represents the road profile 80 which has been bidirectionally low-pass filtered using a break frequency in the range of 1 Hz, and is used as the trajectory; the bidirectional filtering eliminates phase lag inaccuracies that may be present with single directional filtering. When the automobile 84 passes over the road surface represented by line 80, microprocessor 20 of FIG. 2a issues command signals to controllable suspension element 18 of FIG. 2a to urge the payload compartment of automobile 84 to follow the trajectory represented by line 82. The high frequency, low amplitude undulations in the road are easily handled by the normal operation of the active suspension. Developing of a trajectory by low pass filtering is very useful in dealing with the situation as described in FIGS. 3 and 4a - 4c.

Processing the road profile data in the time domain to develop trajectory plans is advantageous when the velocity of the vehicle is constant; that is, each trip across the road segment is at the same velocity.

In some circumstances processing the data in the spatial domain may be more useful than processing the data in the time domain. It may be more convenient to store data in spatial form, and processing the data in the spatial domain may make it unnecessary to transform the data to temporal form. Additionally, processing the data in the spatial domain allows the trajectory to be calculated including velocity as a variable; that is, the trajectory may vary, depending on the velocity. If the data is processed in the spatial domain, it may be advisable to perform some amount of time domain translation, for example to minimize acceleration at objectionable frequencies, such as the 0.1 Hz "seasick" frequency

Trajectory development may take into account factors in addition to the spatial or time domain filtered road profile. For example, the trajectory may take into account large dips or bumps in the road as shown in FIG. 5, and discussed in the corresponding portion of the disclosure.

There has been described novel apparatus and techniques for vertical trajectory planning. It is evident that those skilled in the art may now make numerous modifications and uses of and departures from the specified apparatus and techniques disclosed herein.

## Claims

1. A method for improving accuracy of vehicle position determination, comprising:
determining an initial vehicle position estimate based on GPS data,
recording a sequence of sensor data from a sensor located within the vehicle, and
refining the initial vehicle position estimate by performing pattern matching with a pattern matching system, **characterized in that** said pattern matching system looks for the presence of the recorded sequence of sensor data in a previously recorded pattern of sensor data from a sensor located within the vehicle and associated with the suspension system of the vehicle, and,
the sensor data being Z axis deflection data of a road profile.

2. The method for improving accuracy of claim 1 further comprising using a dead reckoning system to provide additional information on vehicle speed and direction when GPS data is difficult to obtain.

3. The method for improving accuracy of claim 2 wherein the dead reckoning system counts wheel rotations of the vehicle.

4. The method for improving accuracy of claim 2 wherein the dead reckoning system tracks steering angle changes of the vehicle.

5. The method for improving accuracy of claim 1 wherein the pattern matching system multiplies a sequence consisting of n numbers obtained from the known sequence of data by a corresponding sequence of n numbers obtained from the recorded sequence of sensor data, sums the results of the n multiplications, and determines when the sequences match by identifying when the sum of the n multiplications has a peak.

6. The method for improving accuracy of claim 5 wherein the pattern matching system performs continuous pattern matching.

7. The method for improving accuracy of claim 5 wherein the pattern matching system matches consecutive groups of n multiplications.

8. The method for improving accuracy of claim 1 wherein the known sequence of data and the recorded sequence of data are transformed into the spatial domain prior to performing the pattern matching by the pattern matching system.

## Patentansprüche

1. Verfahren zur Verbesserung der Genauigkeit von Fahrzeugpositionsbestimmung, das Folgendes umfasst:
Bestimmen einer anfänglichen Fahrzeugpositionsschätzung basierend auf GPS-Daten,
Aufzeichnen einer Sequenz von Sensordaten von einem Sensor, der sich innerhalb des Fahrzeugs befindet, und
Verfeinern der ursprünglichen Fahrzeugpositionsschätzung durch Ausführen von Mustervergleich mit einem Mustervergleichssystem, **dadurch gekennzeichnet, dass** das Mustervergleichssystem nach der Gegenwart der aufgezeichneten Sequenz von Sensordaten in einem zuvor aufgezeichneten Muster von Sensordaten von einem Sensor, der sich innerhalb des Fahrzeugs befindet und zu dem Federungssystem des Fahrzeugs gehört, sucht, und
wobei die Sensordaten Z-Achsen-Federungsdaten eines Fahrbahnprofils sind.

2. Verfahren zur Verbesserung der Präzision nach Anspruch 1, das ferner das Verwenden eines Koppelnavigationssystems umfasst, um zusätzliche Informationen zur Fahrzeuggeschwindigkeit und -richtung zu liefern, wenn GPS-Daten schwer zu erhalten sind.

3. Verfahren zur Verbesserung der Präzision nach Anspruch 2, wobei das Koppelnavigationssystem Radumdrehungen des Fahrzeugs zählt.

4. Verfahren zur Verbesserung der Präzision nach Anspruch 2, wobei das Koppelnavigationssystem Lenkwinkeländerungen des Fahrzeugs mitverfolgt.

5. Verfahren zur Verbesserung der Präzision nach Anspruch 1, wobei das Mustervergleichssystem eine Sequenz, die aus einer Anzahl n Zahlen besteht, die von der bekannten Datensequenz erhalten wird, mit einer entsprechenden Sequenz von n Zahlen, die von der aufgezeichneten Sequenz von Sensordaten erhalten wird, multipliziert, diese Resultate der n Multiplikation summiert und bestimmt, wann die Sequenzen übereinstimmen, indem identifiziert wird, wann die Summe der n Multiplikationen eine Spitze hat.

6. Verfahren zur Verbesserung der Präzision nach Anspruch 5, wobei das Mustervergleichssystem laufend Mustervergleich ausführt.

7. Verfahren zur Verbesserung der Präzision nach Anspruch 5, wobei das Mustervergleichssystem aufeinanderfolgende Gruppen von n Multiplikation vergleicht.

8. Verfahren zur Verbesserung der Präzision nach Anspruch 1, wobei die bekannte Datensequenz und die aufgezeichnete Datensequenz in den räumlichen Bereich umgewandelt werden, bevor der Mustervergleich durch das Mustervergleichssystem ausgeführt wird.

## Revendications

1. Procédé pour améliorer la précision de détermination de position de véhicule, comprenant :
la détermination d'une estimation de position de véhicule initiale sur la base de données GPS,
l'enregistrement d'une séquence de données de capteur provenant d'un capteur situé à l'intérieur du véhicule, et
l'affinement de l'estimation de position de véhicule initiale par l'exécution d'une correspondance de motifs avec un système de correspondance de motifs, **caractérisé en ce que** ledit système de correspondance de motifs recherche la présence de la séquence enregistrée de données de capteur dans un motif précédemment enregistré de données de capteur provenant d'un capteur situé à l'intérieur du véhicule et associé au système de suspension du véhicule, et
les données de capteur étant des données de déviation par rapport à l'axe Z d'un profil de route.

2. Procédé pour améliorer la précision selon la revendication 1, comprenant en outre l'utilisation d'un système de navigation à l'estime pour fournir des informations supplémentaires relatives à la vitesse de véhicule et à la direction de véhicule lorsque des données GPS sont difficiles à obtenir.

3. Procédé pour améliorer la précision selon la revendication 2, dans lequel le système de navigation à l'estime compte des rotations de roue du véhicule.

4. Procédé pour améliorer la précision selon la revendication 2, dans lequel le système de navigation à l'estime suit des changements d'angle de braquage du véhicule.

5. Procédé pour améliorer la précision selon la revendication 1, dans lequel le système de correspondance de motifs multiplie une séquence se composant de n nombres obtenus à partir de la séquence connue de données par une séquence correspondante de n nombres obtenus à partir de la séquence enregistrée de données de capteur, somme les résultats des n multiplications, et détermine quand les séquences correspondent en identifiant quand la somme des n multiplications a un pic.

6. Procédé pour améliorer la précision selon la revendication 5, dans lequel le système de correspondance de motifs effectue une correspondance de motifs continue.

7. Procédé pour améliorer la précision selon la revendication 5, dans lequel le système de correspondance de motifs correspond à des groupes consécutifs de n multiplications.

8. Procédé pour améliorer la précision selon la revendication 1, dans lequel la séquence connue de données et la séquence enregistrée de données sont transformées dans le domaine spatial avant d'effectuer la correspondance de motifs par le système de correspondance de motifs.
